# EUROPÄISCHE PATENTSCHRIFT

(11) **EP 0 886 160 B1**
(45) Veröffentlichungstag und Bekanntmachung des Hinweises auf die Patenterteilung: **23.05.2001**
(21) Anmeldenummer: 98116702.6
(22) Anmeldetag: 03.09.1998
(51) Int. Cl.: G02B 26/08, H04B 10/105, G02B 23/02, G02B 5/00

(54) **Vorrichtung für optische Freiraum-Uebertragungssysteme**
Device for free-space transmission system
Dispositif pour système de transmission en espace libre

(30) Priorität: 23.01.1998 CH 16098
(43) Veröffentlichungstag der Anmeldung: 23.12.1998
(73) Patentinhaber: Contraves Space AG, 8052 Zürich (CH)
(72) Erfinder: Fischer, Edgar Dr., 8555 Müllheim Dorf (CH); Czichy, Reinhard Hanno Dr., 9034 Eggersriet (CH); Sanvido, Saverio, 8152 Glattbrugg (CH)
(74) Vertreter: OK pat AG

(56) Entgegenhaltungen:
- EP-A- 0 607 906
- EP-A- 0 766 115
- FR-A- 2 538 916
- US-A- 5 142 400
- US-A- 5 390 040
- US-A- 5 517 016
- BONDURANT R S ET AL: "AN OPTO-MECHANICAL SUBSYSTEM FOR SPACE BASED COHERENT OPTICAL COMMUNICATION" HIGH DATA RATE ATMOSPHERIC AND SPACE COMMUNICATIONS, BOSTON, 8 - 9 SEPT., 1988, Nr. VOL. 996, 8. September 1988, Seiten 92-100, XP000041319 HAUPTMAN R

## Beschreibung

Die vorliegende Erfindung betrifft eine Vorrichtung für'optische Freiraum-Übertragungssysteme, insbesondere zur optischen Übertragung von Nachrichten im freien Raum zwischen einer Nachrichtenquelle und einer Nachrichtensenke.

Faseroptische Kommunikationssysteme haben die leitungsgebundene Datenübertragung insbesondere über grosse Distanzen hinweg innerhalb weniger Jahre revolutioniert. So können heute bereits in Betrieb befindliche Systeme hinsichtlich der zur Verfügung stehenden Bandbreite als den bis dahin dominierenden Richtfunkanlagen in jeder Hinsicht überlegen angesehen werden. Lediglich die mobile Kommunikation vermag von diesem Fortschritt durch die leistungsfähigeren Festnetze nur mittelbar zu profitieren, da auch zelluläre Funknetze auf einem Teil des Übertragungsweges schmalbandige und störanfällige Funkkanäle nützen müssen. Bei der Übertragung über oder zwischen Satelliten sind zudem nach wie vor weite Strecken zu überwinden, welche grosse Sendeleistungen und Antennen erzwingen, die wiederum dem Bestreben der Raumfahrt nach möglichst kompakten und leichten Systemen zuwiderlaufen. Daher wurden schon recht bald nach dem Siegeszug der faseroptischen Kommunikationstechnik Bestrebungen in Gang gesetzt, deren Vorteile mittels geeigneter Systeme zur optischen Kommunikation durch den freien Raum ebenfalls zu nutzen.

In der faseroptischen Kommunikationstechnik erwiesen sich speziell bei der Überbrückung grosser Distanzen neue systemimanente Faktoren als begrenzend, insbesondere die Dispersion in dem zu Übertragung genutzten dielektrischen Wellenleiter und diverse nichtlineare Effekte seines Materials.
Die optische Kommunikation im freien Raum wiederum bedeutete die Wiederkehr alter begrenzender Einflüsse der Funktechnik und drahtgebundenen Kommunikation. Dominierend waren hier nun wieder der Verlust an Signalleistung auf der Übertragungsstrecke und der Einfluss von Fremdsignalen. Die äussersten Grenzen der Energie eines zur Übertragung genutzten Symbols werden allerdings wie in der faseroptischen Kommunikation nicht in den das Phänomen des thermischen Rauschens beschreibenden Begriffen, sondern in Photonen pro Bit ausgedrückt.

Zur sicheren Übertragung von Daten mittels Intensitätsmodulation sind beispielsweise bei einer Fehlerquote von 1/1000000000 10.5 Photonen pro Bit inhärent erforderlich (J. S. Senior, Optical Fiber Communications, Principles and Practice, Second Edition, Prentice Hall, Seiten 469 bis 471).
Bessere Ergebnisse sind mit Puls-Positionsmodulation sowie diversen kohärenten Techniken, insbesondere Verfahren mit homodyner Überlagerung, erzielbar. Die besten realisierten Ergebnisse sind mittels homodyner Überlagerung gewonnen worden (weniger als 30 Photonen pro Bit). Da für weltraumgestutzte Systeme eine klare Anforderung hinsichtlich niedrigen Energieverbrauchs besteht, sollte ein optisches System zur Datenübertragung zwischen weit voneinander entfernten geostationären Satelliten Lichtwellen durch eine möglichst grosse und sehr genau ausgerichtete Apertur aussenden und empfangen. Diese wiederum lässt sich ab einer gewissen Grösse unter Beibehaltung eines niedrigen Gewichts nur in Form eines Spiegelteleskops realisieren. Spiegelteleskope sind in sogenannt koaxialer Bauweise in zahlreichen Ausführungsformen bekannt, genannt sein die Systeme nach Gregory, Cassegrain sowie Schmidt ( Eugene Hecht, Optics, Second Edition, Addison-Wesley Publishing Company, Reading, Massachusetts, USA, Seiten 197, 198).

Allen gemeinsam ist der systembedingte Nachteil der teilweisen zentralen Abdeckung der Apertur durch Fangspiegel und deren Aufhängevorrichtung. Hier muss ein Kompromiss zwischen mechanischer Festigkeit und Verlusten durch Aperturabdeckung gefunden werden.

Im allgemeinen ist auch eine zusätzliche Blende erforderlich, welche die durch den Fangspiegel und dessen Aufhängung begünstigte Reflexion von Streulicht in die Richtung des zu empfangenden Lichts verhindert. Die gleichzeitige Verwendung eines solchen Teleskops zur Ausstrahlung einer Lichtwelle sowie des Empfangs einer entgegengesetzt einfallenden Lichtwelle bedingt im allgemeinen signifikante Nachteile, da genannter Fangspiegel samt Aufhängevorrichtung einen Teil der leistungsstarken gesendeten Lichtwelle in Richtung der gleichzeitig einfallenden Lichtwelle reflektiert und durch Überlagerung zu Störungen führt. Unter Hinnahme starker Einbussen hinsichtlich der Abbildungsqualität kann dieses Problem durch Verwendung eines von Kutter vorgeschlagenen Schiefspiegelteleskops umgangen werden. Allerdings führen die genannten Abbildungsfehler zur Vergeudung von wertvoller Sendeleistung.

Eine Lösung dieses Problems ist in der schweizerischen Patentanmeldung Nr. **1997 2930/97** dargelegt, in welcher ein Schiefspiegelteleskop beschrieben ist, welches durch besondere Form seiner Spiegel Abbildungsfehler vermeidet. Generell bedingt eine solche Vorrichtung, welche für die Überbrückung weitester Distanzen insbesondere zwischen geostationär die Erde umlaufenden Satelliten vorgesehen ist, allerdings grosse um wenigstens zwei Achsen relativ zum Satellitenkörper zu drehende Körper, welche die Anzahl der auf einem Satelliten plazierbaren Vorrichtungen einschränkt.

Ein in der schweizerischen Patentanmeldung Nr. **1997 1153/97** beschriebenes Verfahren zur optischen Kommunikation zwischen gleichsinnig auf parallelen und verhältnismässig niedrigen Bahnen umlaufenden Satelliten erfordert auf jedem Satelliten eine hohe Anzahl optischer Terminals, die zudem ihren jeweiligen Erfassungsbereich durch gegenseitige Bedeckung möglichst wenig einschränken sollten. Die zu überbrückenden Entfernungen erfordem schon eine Abkehr von auf Linsenoptik beruhenden Systemen, das Gewicht der Spiegeloptik hingegen sollte aufgrund der hohen Anzahl der auf den einzelnen Satelliten angebrachten Systemen äusserst niedrig sein.

Das US-Patent 5,390,040 beschreibt ein optisches System für die Freiraumkommunikation. Das beschriebene optische System hat einen Steuerspiegel, der über ein komplizierten Drehmechanismus verstellt werden kann, einen Hauptspiegel und einen Fangspiegel. Bei dem im US-Patent 5,390,040 gezeigten System nimmt das zu sendende Licht einen anderen Weg als das empfangene Licht.

Folglich ist es Aufgabe der nachfolgend beschriebenen Erfindung, die oben beschriebenen Anforderungen in besonders günstiger Weise zu erfüllen, indem mittels einer stark reduzierten Anzahl von Spiegeln und einer speziell ausgeführten Bauweise sowohl ein niedriges Gewicht als auch eine geringe Einschränkung des Erfassungsbereichs benachbarter Vorrichtungen erzielt wird.

Die Lösung dieser Aufgabe wird mit den Merkmalen des Patentanspruchs 1 erreicht.

Die Erfindung beinhaltet ein optisches Kommunikationssystem, dessen optische Bestandteile unter anderem ein Teleskop umfassen, das in konventioneller Bauweise als Spiegelteleskop ausgeführt ist. Die Grobausrichtung des zu sendenden Lichtstrahls und der Empfangsrichtung geschieht erfindungsgemäss mittels eines einzigen planaren Spiegels, welcher in Bauweise eines Periskops schräg an der äusseren Öffnung des Teleskops angebracht ist und um die optische Achse des Teleskops voll drehbar gelagert ist. Der planare Spiegel ist in seiner reflektierenden Fläche gegenüber der optischen Achse des Teleskops um 45 Grad geneigt angebracht und lässt sich von dieser Neigung um wenige Grad abweichend verstellen.

Die geschilderten Nachteile eines zentral vor dem Hauptspiegel des Teleskops angebrachten Fangspiegels lassen sich erfindungsgemäß mit speziellen optischen Vorrichtungen umgehen, mittels derer ein in das Teleskop zur Abstrahlung eingekoppelter Lichtstrahl derart verändert wird, dass er in den Raumbereich zwischen zwei Kegelflächen mit verschiedenem Öffnungswinkel leuchtet, und schliesslich durch den Hauptspiegel des Teleskops in einen Lichtstrahl übergeführt wird, welcher in seinem inneren Bereich eine Aussparung aufweist, in welcher der zentral angeordnete Fangspiegel plaziert ist.

Als Weiterentwicklung dieses Erfindungsgedankens sind Umformungen eines Lichtstrahls vorgesehen, die auch die Aufhängevorrichtung für einen derartigen Fangspiegel umfassen.

Die Realisierung einer solchen optischen Vorrichtung ist auf verschiedene Arten möglich. So kann eine speziell geformtes Bauteil (Axicon) verwendet werden, oder aber ein holographisches Phasengitter, welches insbesondere bei komplexeren Anpassungen eines zu sendenden Lichstrahles angewendet werden kann. Alternativ kann ein Ensemble von vier verkippten Planparallelplatten zur Erzeugung von vier aussermittigen Teilstrahlen benutzt werden.

Als Vorteil ergibt sich die Vermeidung der Überkopplung des zu sendenden Lichstrahls auf den optischen Empfänger der Vorrichtung und die damit auftretenden Störungen. Weiterhin erfolgt eine ökonomische Verwendung der mit grossem Aufwand erzeugten optischen Sendeleistung, was dadurch besonders vorteilhaft ist, dass diese mit einem Vielfachen an optischer Pumpleistung erzeugt werden muss, welcher wiederum deren Mehrfaches an elektrischer Leistung zur Erzeugung benötigt.

Ein weiterer Vorteil des erfindungsgemässen mechanischen Aufbaus besteht in der Verwendung eines einzigen mechanisch um zwei Achsen drehbaren Spiegels zur groben Ausrichtung des zu sendenden Lichstrahls sowie der Empfangsrichtung. Zusammen mit noch lediglich einem grösseren mit Brechkraft versehenen Spiegel des Teleskops ergibt sich ein äusserst geringes Gewicht des optischen Teilsystems, welches noch weiter verringert werden kann, sofern derjenige Teil des drehbar gelagerten Spiegels, welcher wegen Bedekkung durch den Fangspiegel des Teleskops nicht mit Licht bestrahlt wird, durch eine zentrale Ausnehmung entfernt wird. Diese zentrale Ausnehmung kann gleichzeitig die Aufhängevorrichtung des Spiegels oder eine optische Bake aufnehmen.

Weitere Einzelheiten, Merkmale und Vorteile der Erfindung ergeben sich nicht nur aus den Ansprüchen und diesen zu entnehmenden Merkmalen - für sich und/oder in Kombination, sondern auch aus der nachfolgenden Beschreibung bevorzugter Ausführungsbeispiele.

Es zeigen:
- **Fig. 1**: ein Spiegelteleskop zusammen mit weiteren wesentlichen Komponenten eines optischen Übertragungssystems,
- **Fig. 2**: einen schematischen Querschnitt durch die in Fig. 1 dargestellten Systeme,
- **Fig. 3**: die Explosionszeichnung der wesentlichen optischen und mechanischen Komponenten eines optischen Übertragungssystems,
- **Fig. 4**: einen sagittalen Schnitt durch das in Fig. 3 dargestellte optische Übertragungssystem,
- **Fig. 5**: eine besonders vorteilhafte Ausführung des zur Grobausrichtung verwendeten drehbar gelagerten Spiegels,
- **Fig. 6**: ein Axicon,
- **Fig. 7**: ein holographisches Phasengitter,
- **Fig. 8**: ein optisches System,
- **Fig. 9**: ein aus planparallelen Platten gefertigtes optisches System.
- **Fig. 10**: eine weitere Vorrichtung zur Feinabstimmung der Empfangsrichtung der Empfangseinheit zu **Fig. 1**

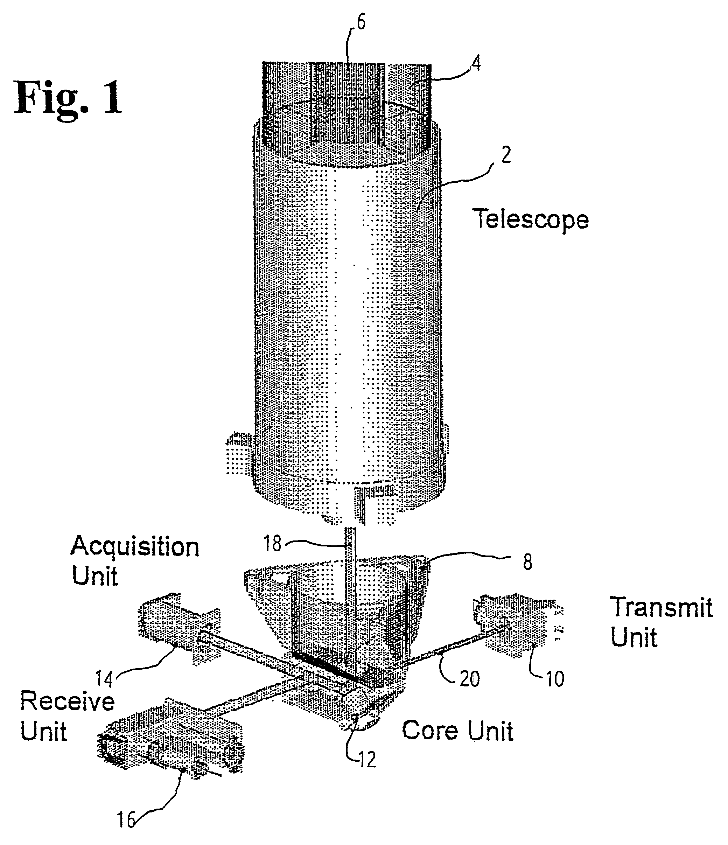

**Fig. 1** umfasst mehrere wichtige Baugruppen eines optischen Übertragungssystems in Explosionsdarstellung. Um den Körper des Teleskops **2** sind, durch einen Träger **8** verbunden, eine Sendeeinheit **10,** eine Akquisitionseinheit **14**, eine Empfangseinheit **16** sowie eine Kerneinheit **12** angeordnet.

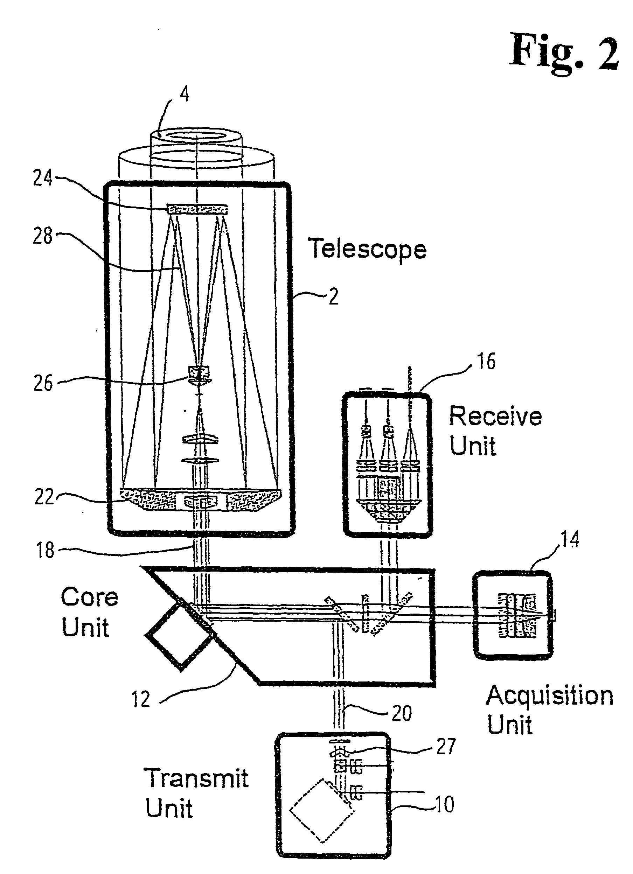

Die Kerneinheit **12** bewirkt, wie in **Fig. 2** dargestellt, die Einkoppelung eines zu sendenden Lichtstrahls **20** in das Teleskop sowie die Aufteilung des empfangenen Lichts in die Empfangseinheit **16** und die Akquisitionseinheit **14.** Der zu sendende Lichtstrahl **20** geht nach Überführung in den zum Strahl empfangener Lichtwellen kongruenten Lichtstrahl **18** und dem Durchlaufen des Teleskops **2** in einen kollimierten Lichtstrahl **4** über, welcher senkrecht zu seiner Ausbreitungsrichtung eine ringförmige Intensitätsverteilung aufweist. Der Aussendurchmesser des Lichtstrahls sowie der Durchmesser seiner inneren Aussparung **6** sind durch die Fläche eines Hauptspiegels **22** und die Blendenwirkung eines Fangspiegels **24** bestimmt, unabhängig von der Wirkung eines Axicons **26,** dessen Aufgabe darin besteht, die Ausleuchtung des Hauptspiegels zu optimieren. Die Optimierung geschieht dadurch, dass der kollimierte Lichtstrahl **18** durch Lichtbrechung oder andere Methoden in einen divergenten Lichtstrahl **28** umgeformt wird, welcher um die optische Achse des Teleskops **2** rotationssymmetrisch denjenigen Raumwinkelbereich ausleuchtet, der nach einer Reflexion am planen Fangspiegel **24** und einer weiteren Reflexion und Umformung am Hauptspiegel **22** frei von grösseren Hindernissen ist. Dadurch wird ein besonders grosser Teil der im kollimierten Strahl **18** geführten optischen Leistung über den kollimierten Strahl **4** abgestrahlt, weiterhin erfolgt eine sehr geringe Rückstrahlung von zu sendendem Licht in die Empfangseinheit **16.** Ein das Axicon **26** oder gleichartig wirkende Vorrichtungen beinhaltendes optisches System **27** ist in einem weiteren Ausführungsbeispiel bereits in der Sendeeinheit **10** integriert und bewirkt einen mit einer zentralen Aussparung versehenen zu sendenden Lichtstrahl **20,** welcher in den Lichtstrahl **18** übergeht und nach Durchlaufen des Teleskops die Form des Lichtstrahls **4** annimmt. Eine ein Axicon **26** oder ein vergleichbares Bauteil beinhaltende optische Vorrichtung kann aber auch an einer beliebigen Stelle im Strahlengang zwischen der in **Fig. 2** mit dem Axicon **26** dargestellten Position und der Sendeeinheit **10** installiert sein, um die oben beschriebene erwünschte Wirkung zu erzielen. In weiteren Ausführungen sind die Sendeeinheit **10,** die Akquisitionseinheit **14** und die Empfangseinheit **16** miteinander in beliebiger Weise vertauscht, wobei das optische System ebenfalls an einem beliebigen Ort im Strahlengang zwischen der Sendeeinheit **10** und der in **Fig. 2** durch das Axicon **26** bezeichneten Stelle positioniert werden kann.

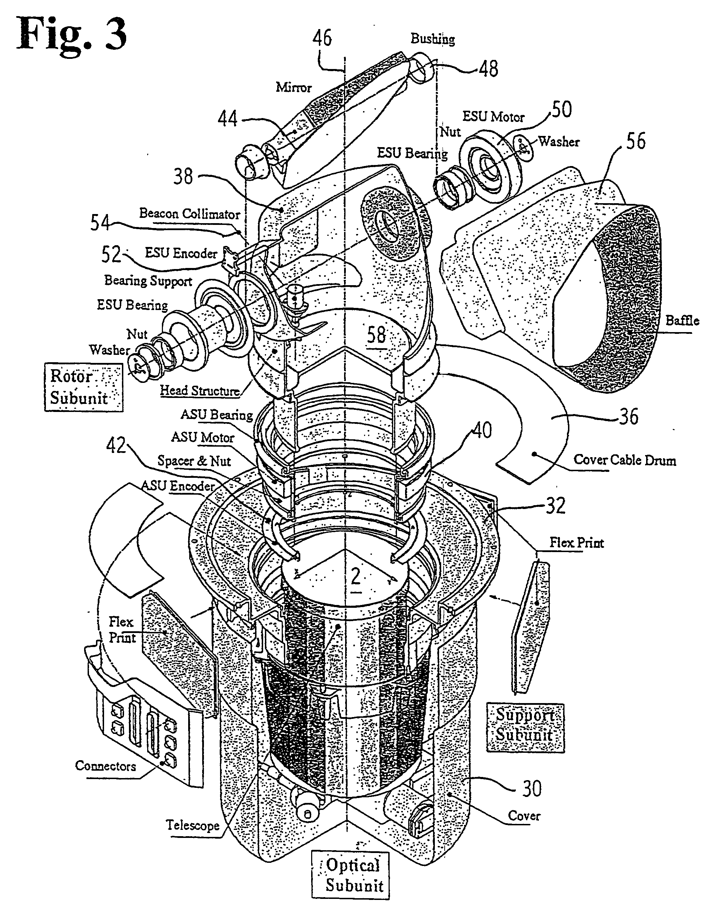

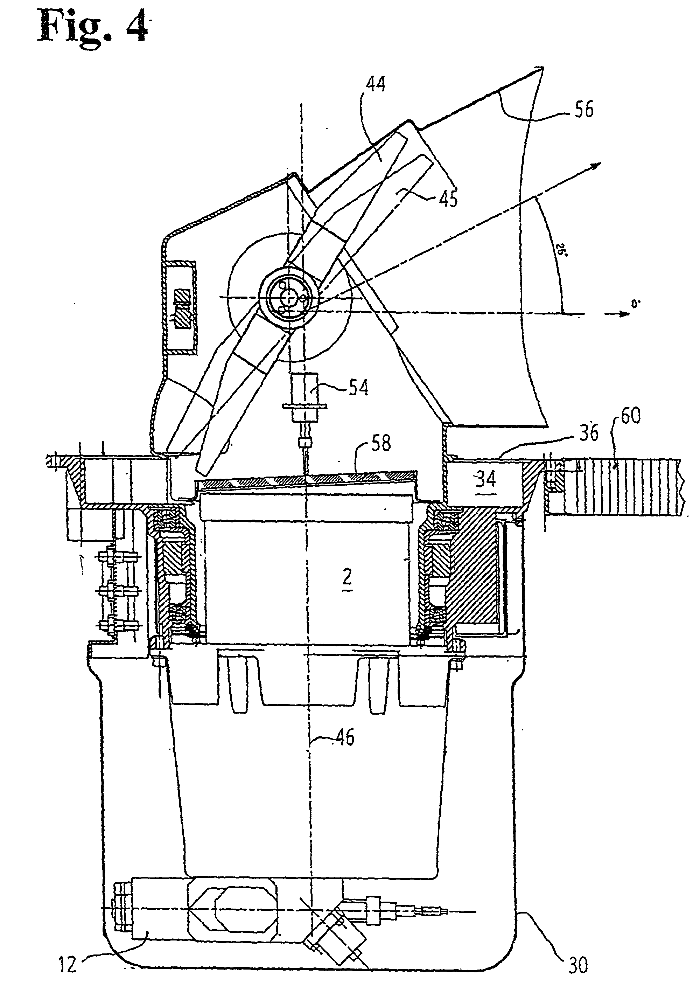

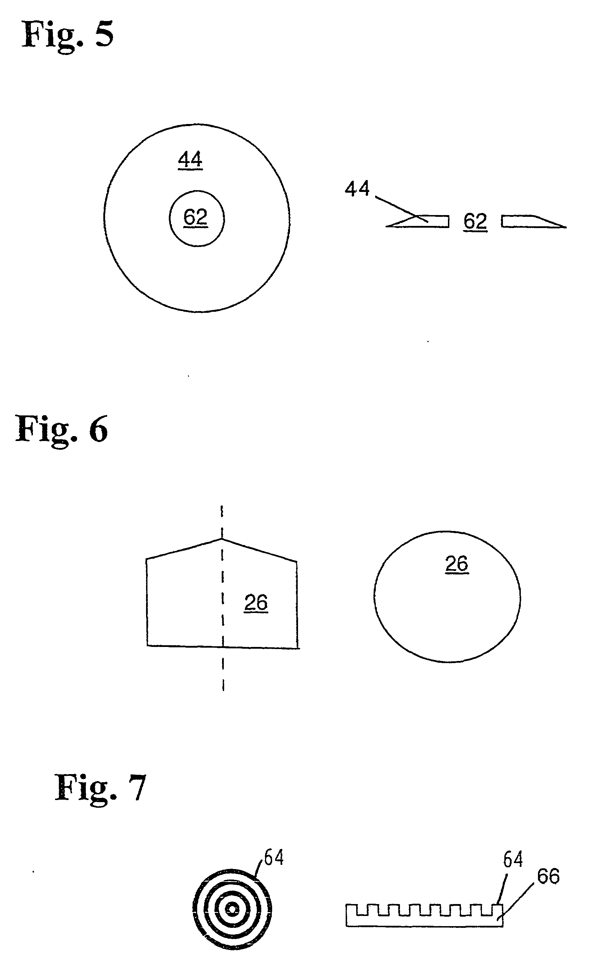

Die Integration der in **Fig. 1** und **Fig. 2** dargestellten Baugruppen in einem optischen Übertragungssystem ist in **Fig. 3** dargestellt. Das Teleskop **2** ist an einem ringförmigen Gehäuse **32** angeflanscht, welches gleichzeitig eine Kabeltrommel **34** beinhaltet, die von einem Deckel **36** abgeschlossen in ein azimuthal drehbares Kopfteil **38** führende Leitungen bei entsprechenden Drehbewegungen mitführt. Die Teleskopeinheit **2** und daran angebrachte Teilsysteme werden von einem wannenförmigen Gehäuse **30** umschlossen. Drehbewegungen des Kopfteils **38** um die Azimuthachse werden durch einen elektrischen Motor **40** eingeleitet und mittels eines Winkelmessgebers **42** kontrolliert. Das Kopfteil **38** beinhaltet einen in neutraler Position um **45** Grad gegenüber der Längsachse **46** des Gehäuses **30** geneigten, zur Grobausrichtung des zu sendenden Lichstrahls sowie der Empfangsrichtung verwendeten planen Spiegel **44,** welcher im Kopfteil **38** quer zur Längsachse **46** des Gehäuses **30** um eine weitere Achse **48** drehbar gelagert ist. Drehbewegungen um die Achse **48** werden von einem weiteren elektrischen Motor **50** eingeleitet und mittels eines weiteren Winkelgebers **52** kontrolliert. Ein Kollimator **54** strahlt einen Bakenlichtstrahl zur Unterstützung der Verbindungsaufnahme mit einem anderen optischen Übertragungssystem aus, welcher ebenfalls mittels des Spiegels **44** umgelenkt und ausgerichtet wird. Der Kollimator **54** kann zur Vermeidung der Schwächung des zu sendenden Lichtstrahls **4** in Strahlrichtung in einer Linie zum Fangspiegel **24** oder parallel zum Lichtstrahl **4** angebracht werden. Zwecks Vermeidung seitlich eingestreuten Lichts ist der Kopfteil **38** mit einer Blende **56** versehen. Das Teleskop **2** ist, wie in **Fig. 4** in einem sagittalen Schnitt dargestellt, mit einer zwecks Vermeidung von Rückstreuung zur Achse **46** leicht angewinkelten Quarzglasplatte **58** abgeschlossen, um die darunter befindlichen Optik vor Partikel- und Gammastrahlung zu schützen. Wie anhand eines in **Fig. 4** um die Achse **48** gegenüber dem Spiegel **44** verdreht dargestellten Spiegels **45** ersichtlich, lassen sich die Empfangsrichtung und die Richtung des abgestrahlten Lichts im Elevationswinkel eingeschränkt beeinflussen. Der besondere Zweck des erfindungsgemässen Kommunikationssystems lässt jedoch diese Einschränkung zu, welche den gleichzeitigen Betrieb einer grösseren Zahl von Terminals auf einer Montageebene **60** eines Satelliten zulässt, ohne dass diese sich in zu grossem Masse gegenseitig in ihrem Erfassungsbereich beschneiden. Sofern der Kollimator **54** zur Abstrahlung des zur Aufnahme der Verbindung mit einem anderen optischen Übertragungssystem nötigen Bakenlichts in der in **Fig. 3** und **Fig. 4** dargestellten Position angebracht wird, kann unter Berücksichtigung der aufgrund des Fangspiegels **24** gegebenen teilweisen Abschattung des zur Grobausrichtung verwendeten Spiegels **44** eine Massenreduktion desselben erzielt werden, indem der zentrale abgeschattete Bereich **62** nach **Fig. 5** vollständig entfernt wird.

Darüber hinaus kann eine weitere Reduktion der Masse des Spiegels **44** nach dem bereits in der schweizerischen Patentanmeldung Nr. **1996 2988/96** beschriebenen Verfahren erfolgen, bei welchem der Körper des Spiegels **44** über seine ganze der reflektierenden Schicht abgewandten Fläche mit dicht aneinandergrenzenden, bis knapp an die reflektierende Schicht heranreichenden sacklochartigen Ausnehmungen versehen wird, deren Struktur sich der im Flugzeugbau bekannten gewichtssparenden Wabenstruktur annähert. Der vollständig entfernte abgeschattete Bereich **62** des Spiegels **44** ist ausserdem zur Aufnahme einer Passung geeignet, an welcher alternativ der Spiegel **44** mit dem Kopfstück **38** um eine oder zwei Achsen drehbar verbunden wird. Das zur Formung eines den geforderten Raumwinkelbereich ausleuchtenden divergenten Lichtstrahls erforderliche Axicon **26** ist als Linsenkörper ausgeführt, dessen Oberfläche kegelförmig ausgeführt ist **(Fig. 6).**
Hierdurch wird in Kombination mit konventionellen Linsen der über den Fangspiegel **24** reflektierte divergente und in einen durch einen inneren sowie einen äusseren Kegel beschränkte Lichtstrahl **28** erzeugt. Dies geschieht dadurch, dass der Lichtstrahl **18** an den beiden im Querschnitt planen Flächen des Axicons **26** wiederum im Querschnitt in zwei Teilstrahlen aufgebeugt wird, wobei sich allerdings in räumlicher Betrachtung ein einziger Lichtstrahl ergibt, der von zwei in Richtung der optischen Achse zueinander verschobenen Kegeln gleichen Öffnungswinkels begrenzt wird und ohne Berücksichtigung von Beugungseffekten einen unendlich kleinen Raumwinkel ausleuchtet. Konventionelle Linsen bewirken hierbei die Begrenzung des Lichtstrahls durch zwei Kegel unterschiedlichen Öffnungswinkels. Die Integration einer konventionellen Linse mit einem Axicon **26** kann dadurch erfolgen, dass die sphärische Oberfläche einer Linse konisch verzerrt wird oder Vorder- und Rückseite des Körpers eines solchen Elementes eine konische bzw. sphärische Oberfläche aufweisen. Das Axicon **26** kann aber auch durch ein in der europäischen Patentanmeldung **EP 0 795 733 A** beschriebenes holographisches Phasengitter **64** nach **Fig. 7** ersetzt werden. Dessen Wirkung beruht auf der kontrollierten Störung des Phasenverlaufs entlang der Front einer ursprünglich ebenen Lichtwelle. Wie in **Fig. 7** dargestellt, erfolgt diese Störung über die Durchstrahlung eines optisch dichteren Mediums **66,** dessen Oberfläche rotationssymmtrisch in konstanter Periode Ausnehmungen aufweist. Hierdurch wird die ursprünglich ebene Wellenfront in zueinander gegenphasige kreisförmige Zonen aufgeteilt, welche in erster Ordnung rotationssymmetrisch zur optischen Achse in einem durch den gegenseitigen Abstand dieser Zonen und durch die Wellenlänge bestimmten Winkel konstruktiv, in Richtung der optischen Achse aber destruktiv interferieren.

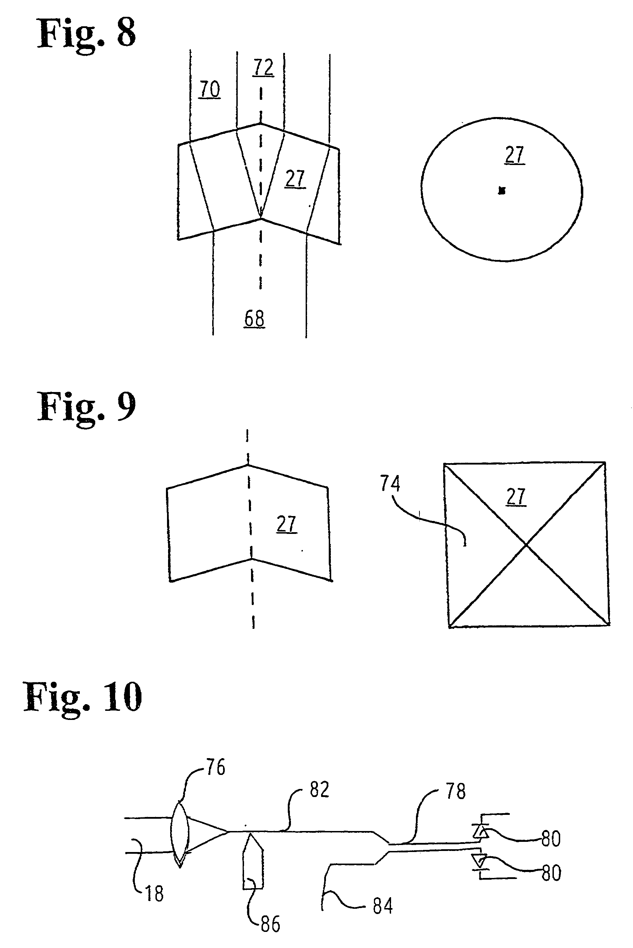

Soll, wie oben beschrieben, ein kollimierter zu sendender Strahl **20** lediglich umgeformt werden, so dass dieser ein entsprechendes optisches System wieder als nicht divergenter Strahl mit einer zentralen Aussparung verlässt, sind Vorrichtungen nach **Fig. 8** und **Fig. 9** zu verwenden. Das optische System **27** nach **Fig. 8** besteht aus einem Glaskörper, welcher von zwei zueinander verschobenen Kegeln gleichen Öffnungswinkels begrenzt ist und einen kollimierten Lichtstrahl **68** mittels zweifacher rotationssymmetrischer Beugung an seinen Grenzflächen in einen rotationssymmetrischen kollimierten Lichtstrahl **70** mit einer rotationssymmetrsichen zentralen Aussparung **72** überführt.

Ein in **Fig. 9** dargestelltes System **27** hingegen besteht aus vier entsprechend bearbeiteten und aneinandergefügten planparallelen Platten **74,** welche in vier Winkelbereiche kleeblattartig voneinander getrennte kollimierte Teilstrahlen erzeugen, die nicht nur einen quadratsichen Kernbereich aussparen, sondern auch einen kreuzförmigen Bereich unbeleuchtet lassen, womit die Beleuchtung von für den Fangspiegel **24** vorgesehenen Haltestegen vermieden werden kann. Das in **Fig. 9** dargestellte System kann auch aus lediglich drei planparallelen Platten **74** zusammengesetzt werden, oder einer beliebigen Anzahl, wobei unendlich viele Platten **74** den Übergang in die konische Form nach **Fig. 8** bedeuten.

Zur Feinausrichtung der Empfangsrichtung wird in einer weiteren Ausführung nach **Fig. 10** der in das Empfangssystem **16** eingekoppelte Teil des kollimierten Lichtstrahls **18** mittels einer Linse **76** oder einer komplexeren optischen Vorrichtung in einen einmodigen Lichtwellenleiter **82** gekoppelt, welcher mittels orthogonal zueinander am Lichtwellenleiter **82** angebrachten Aktuatoren **86** in das einzukoppelnde Licht gerichtet wird. in einem Richtkoppler **78** wird dieses mit dem in einem weiteren Lichtwellenleiter **84** herangeführten Licht eines Lokaloszillator-Lasers überlagert, um über die beiden verbleibenden Tore des Richtkopplers **78** zwei Photodioden **80** zugeführt zu werden, deren Photostrom einem Balanced-Receiver zugeführt wird.

Die zur Formung des Lichtstrahls verwendeten Vorrichtungen nach den **Fig. 7, Fig. 8** und **Fig. 9** sind in einer weiteren Ausführung durch eine feste Anordnung von Wellenleitern ersetzt, welche jeweils einen Teilstrahl eines Bündels von kollimierten parallelen Lichtstrahlen abstrahlen, wobei durch Anordnung der Wellenleiter entsprechende Aussparungen im Gesamtstrahl entstehen.

## Patentansprüche

1. Vorrichtung für optische Freiraum-Übertragungssysteme, insbesondere zur optischen Übertragung von Nachrichten im freien Raum zwischen einer Nachrichtenquelle und einer Nachrichtensenke, bestehend aus wenigstens einem Teleskop **(2),** einer Empfangseinheit **(16),** einer Sendeeinheit **(10)** sowie einem Spiegel **(44)** zur Grobausrichtung des zu sendenden Lichstrahls und der Empfangsrichtung, wobei der Spiegel (**44**) um eine erste, im wesentlichen parallel zur Teleskop-Längsachse **(46)** gerichtete Achse und um eine zweite, quer zur Teleskop-Längsachse **(46)** gerichtete Achse **(48)** drehbar gelagert ist, und wobei das Teleskop **(2)** einen zentral vor einem Hauptspiegel **(22)** angeordneten Fangspiegel **(24)** aufweist, gekennzeichnet durch eine senderseitig, vor dem Fangspiegel **(24)** angeordnete optische Einrichtung, mittels derer ein in das Teleskop **(2)** zur Abstrahlung eingekoppelter Lichtstrahl derart verändert wird, dass er in den Raumbereich zwischen zwei Kegelflächen mit verschiedenem Öffnungswinkel leuchtet und durch den Hauptspiegel **(22)** des Teleskops **(2)** in einen Lichtstrahl übergeführt wird, welcher in seinem inneren Bereich eine Aussparung aufweist, in welcher der Fangspiegel **(24)** plaziert ist.

2. Vorrichtung nach Anspruch **1**,
**dadurch gekennzeichnet, dass**
der Spiegel **(44)** vollständig um die Teleskop-Längsachse **(46)** drehbar ist, die Normale seiner reflektierenden Schicht gegenüber der Teleskop-Längsachse **(46)** um 45 Grad geneigt ist, dieser Winkel ausserdem um wenigstens einige Grad durch Drehung um die Achse **(48)** von 45 Grad abweichen kann.

3. Vorrichtung nach Anspruch **1**,
**dadurch gekennzeichnet, dass**
ein zur Abstrahlung von Bakenlicht verwendeter Kollimator **(54)** koaxial oder parallel zur Teleskop-Längsachse **(46)** angeordnet Licht durch Reflexion am Spiegel **(44)** abstrahlt.

4. Vorrichtung nach einem der vorangegangenen Ansprüche,
**dadurch gekennzeichnet, dass**
der Fangspiegel **(24)** auf einer Platte **(58)** befestigt ist.

5. Vorrichtung nach Anspruch **3**,
**dadurch gekennzeichnet, dass**
der Kollimator **(54)** rückseitig zum Fangspiegel **(24)** angebracht ist.

6. Vorrichtung nach einem der vorangegangenen Ansprüche,
**dadurch gekennzeichnet, dass**
der Spiegel **(44)** im abgeschatteten Bereich **(6)** des Lichtstrahls **(4)** eine Bohrung **(62)** aufweist.

7. Vorrichtung nach Anspruch **1**,
**dadurch gekennzeichnet, dass** die optische Einrichtung ein
Axicon **(26)** aufweist, dessen Oberfläche kegelförmig ist.

8. Vorrichtung nach Anspruch **1**,
**dadurch gekennzeichnet, dass** die optische Einrichtung ein
holographisches Phasengitter **(64)** aufweist.

9. Vorrichtung nach Anspruch **1**,
**dadurch gekennzeichnet, dass** die optische Einrichtung zur
Umformung eines kollimiert zu sendenden Lichtstrahls **(20)** ein optisches System **(27)** aufweist, welches einen kollimierten Strahl **(68)** mittels doppelter rotationssymmetrischer Beugung an seinen konischen Grenzflächen in einen mit einer rotationssymmetrischen zentralen Aussparung **(72)** versehenen kollimierten Strahl **(70)** umsetzt.

10. Vorrichtung nach Anspruch **1**,
**dadurch gekennzeichnet, dass** die optische Einrichtung zur
Umformung eines kollimiert zu sendenden Lichtstrahls **(20)** ein optisches System **(27)** aufweist, welches einen kollimierten Strahl mittels doppelter Brechung an einer Anordnung planparalleler Platten **(74)** in mehrere voneinander abgegrenzte kollimierte Teilstrahlen zerlegt.

11. Vorrichtung nach Anspruch **1**,
**dadurch gekennzeichnet, dass**
sich nur ein einziges drehbares Kopfteil **(38)** oberhalb einer Montageebene **(60)** befindet.

12. Vorrichtung nach Anspruch **1**,
**dadurch gekennzeichnet, dass** das Teleskop **(2)** eine Akquisitionseinheit **(14)** aufweist.

13. Vorrichtung nach Anspruch **1**,
**dadurch gekennzeichnet, dass**
in der Empfangseinheit **(16)** das zu detektierende Licht in einen mittels Aktuatoren **(86)** abgleichbaren Lichtwellenleiter **(82)** gekoppelt wird.

## Claims

1. Device for optical space transmission systems, in particular for optical transmission of news in space between one news source and a news footprint, comprising at least one telescope (2), a receive unit (16), a transmit unit (10) as well as a mirror (44) for rough alignment of the transmit lightbeam and the receive direction, and the mirror (44) is rotary mounted around a first axis which is essentially oriented parallel to the telescope's longitudinal axis (46) and around a second axis (48) which is oriented transversely to the telescope's longitudinal axis (46), and the telescope (2) comprises an objective mirror (24) arranged centrally in front of a main mirror (22), **characterised by** an optical device arranged on the transmit side in front of the objective mirror (24) by means of which a lightbeam which is coupled into the telescope (2) for outward radiation is changed so that it illuminates the space area between two conical surfaces of different opening angle and through the main mirror (22) of the telescope (2) is transferred a lightbeam which has in its inner area a cutout in which the objective mirror (24) is placed.

2. Device according to Claim 1, **characterised in that** the mirror (44) is fully rotary around the telescope's longitudinal axis (46), the normal of its reflecting layer is inclined by 45 degrees relative to the telescope's longitudinal axis (46), and this angle can also deviate by at least a few degrees by rotation around the axis (48) of 45 degrees.

3. Device according to Claim 1, **characterised in that** a collimator (54) used for radiating beaconlight radiates light by reflection on the mirror (44) coaxially or parallel to the telescope's longitudinal axis (46).

4. Device according to one of the above claims, **characterised in that** the objective mirror (24) is mounted on a plate (58).

5. Device according to Claim 3, **characterised in that** the collimator (54) is placed at the rear of the objective mirror (24).

6. Device according to one of the above claims, **characterised in that** the mirror (44) has a bore (62) in the shaded area (6) of the lightbeam (4).

7. Device according to Claim 1, **characterised in that** the optical device comprises an axicon (26) the surface of which is conical.

8. Device according to Claim 1, **characterised in that** the optical device comprises a holographic phase grating (64).

9. Device according to Claim 1, **characterised in that** the optical device for conversion of a collimated transmit lightbeam (20) comprises an optical system (27) which converts a collimated beam (68) by means of double rotary-symmetrical diffraction at its conical defining surfaces into a collimated beam (70) which is provided with a rotary-symmetrical central cutout (72).

10. Device according to Claim 1, **characterised in that** the optical device for conversion of a collimated transmit lightbeam (20) comprises an optical system (27) which splits a collimated beam by means of double diffraction on an array of plane-parallel plates (74) into a plurality of collimated beam portions which are defined relative to each other.

11. Device according to Claim 1, **characterised in that** there is only one single rotary head part (38) above an assembly plane (60).

12. Device according to Claim 1, **characterised in that** the telescope (2) comprises an acquisition unit (14).

13. Device according to Claim 1, **characterised in that** the light which is to be detected is in the receive unit (16) coupled in a lightwave conductor (82) which is balanced by means of actuators (86).

## Revendications

1. Dispositif pour des systèmes de transmission optique dans l'espace libre, en particulier pour une transmission optique de communications dans l'espace libre entre une source de communications et un collecteur de communications, composé d'au moins un télescope **(2),** une unité réceptrice **(16),** une unité émettrice **(10)** et un miroir **(44)** pour l'alignement approximatif du faisceau lumineux à émettre et de la direction de réception, le miroir **(44)** étant placé de façon à pouvoir pivoter autour d'un premier axe, orienté essentiellement parallèlement à l'axe longitudinal du télescope **(46)** et autour d'un second axe **(48)** orienté perpendiculairement à l'axe longitudinal du télescope **(46),** et le télescope **(2)** présentant un miroir d'acquisition **(24)** disposé de façon centrale devant un miroir principal **(22),** caractérisé par un dispositif optique côté émission, disposé devant le miroir d'acquisition **(24),** au moyen duquel un faisceau lumineux couplé dans le télescope **(2)** pour une émission est modifié de façon telle qu'il illumine la zone d'espace entre deux surfaces coniques avec angle d'ouverture différent et est transmis par le miroir principal **(22)** du télescope **(2)** dans un faisceau lumineux qui présente dans sa zone interne un évidement dans lequel est placé le miroir d'acquisition **(24).**

2. Dispositif selon la revendication 1, caractérisé en ce que le miroir **(44)** peut entièrement pivoter autour de l'axe longitudinal du télescope **(46),** la normale de sa couche réfléchissante est inclinée de 45 degrés par rapport à l'axe longitudinal du télescope **(46),** cet angle pouvant en outre diverger des 45 degrés d'au moins quelques degrés par pivotement autour de l'axe **(48).**

3. Dispositif selon la revendication 1, caractérisé en ce qu'un collimateur **(54)** utilisé pour émettre une lumière optique de pointage émet une lumière disposée coaxialement ou parallèlement à l'axe longitudinal du télescope **(46)** par réflexion au niveau du miroir **(44).**

4. Dispositif selon l'une des revendications précédentes, caractérisé en ce que le miroir d'acquisition **(24)** est fixé sur une plaque **(58).**

5. Dispositif selon la revendication 3, caractérisé en ce que le collimateur **(54)** est placé à l'arrière par rapport au miroir d'acquisition **(24).**

6. Dispositif selon l'une des revendications précédentes, caractérisé en ce que le miroir **(44)** présente dans la zone occultée **(6)** du faisceau lumineux (**4**) un perçage **(62).**

7. Dispositif selon la revendication 1, caractérisé en ce que le dispositif optique présente un axicon **(26)** dont la surface est conique.

8. Dispositif selon la revendication 1, caractérisé en ce que le dispositif optique présente un réseau de phase holographique **(64).**

9. Dispositif selon la revendication 1, caractérisé en ce que le dispositif optique, pour déformer un faisceau lumineux collimaté à émettre **(20)** présente un système optique **(27)** qui transforme un faisceau collimaté **(68)** au moyen d'une diffraction par double symétrie de révolution au niveau de ses surfaces limites coniques en un faisceau collimaté **(70)** équipé d'un évidement central par symétrie de révolution **(72).**

10. Dispositif selon la revendication 1, caractérisé en ce que le dispositif optique, pour déformer un faisceau lumineux collimaté à émettre **(20)** présente un système optique **(27)** qui décompose un faisceau collimaté, au moyen d'une double réfraction au niveau d'une disposition de lames à faces parallèles **(74),** en plusieurs faisceaux collimatés partiels délimités l'un par rapport à l'autre.

11. Dispositif selon la revendication 1, caractérisé en ce qu'il ne se trouve qu'un élément de tête pivotant **(38)** au-dessus d'une zone de montage **(60).**

12. Dispositif selon la revendication 1, caractérisé en ce que le télescope **(2)** présente une unité d'acquisition **(14).**

13. Dispositif selon la revendication 1, caractérisé en ce que dans l'unité réceptrice **(16),** la lumière à détecter est couplée dans un guide d'ondes optiques **(82)** ajustables au moyen d'actionneurs **(86).**
